**Europäisches Patentamt**

**European Patent Office**

**Office européen des brevets**

(11) Veröffentlichungsnummer: **0 167 808**
**B1**

(12) **EUROPÄISCHE PATENTSCHRIFT**

(45) Veröffentlichungstag der Patentschrift:
**09.12.87**

(21) Anmeldenummer: **85106850.2**

(22) Anmeldetag: **03.06.85**

(51) Int. Cl.⁴: **H 02 M 1/14**

(54) Schaltungsanordnung für geregelte Stromversorgungsgeräte, insbesondere für Umrichter.

(30) Priorität: **05.06.84 DE 3420908**

(43) Veröffentlichungstag der Anmeldung:
**15.01.86 Patentblatt 86/3**

(45) Bekanntmachung des Hinweises auf die Patenterteilung:
**09.12.87 Patentblatt 87/50**

(84) Benannte Vertragsstaaten:
**AT DE FR GB IT NL**

(56) Entgegenhaltungen:
**DE - A - 1 563 054**
**DE - A - 2 433 825**

(73) Patentinhaber: **Siemens Aktiengesellschaft Berlin und München, Wittelsbacherplatz 2, D-8000 München 2 (DE)**

(72) Erfinder: **Brakus, Bogdan, Dipl.-Ing., Ihleweg 4, D-8039 Puchheim (DE)**

ACTORUM AG

# Beschreibung

Die Erfindung betrifft eine Schaltungsanordnung der im Gattungsbegriff des Patentanspruches 1 beschriebenen Art. Derartige Schaltungsanordnungen sind bereits durch die deutschen Offenlegungsschriften 1 563 054 und 2 433 825 bereits bekannt.

Geregelte Stromversorgungsgeräte neigen zu Schwingungen. Dies hat seine Ursache darin, dass die den Zusammenhang zwischen Eingangsspannung und -strom wiedergebende Kennlinie des Schaltungsteiles, in welchem die Regelung stattfindet, bereichsweise eine negative Steigung aufweist. Zur Veranschaulichung dieses Phänomens sei ein verlustfreier oder -armer Umrichter betrachtet: Wenn die Ausgangsspannung bei gegebenem Lastwiderstand auf einen Sollwert geregelt wird, der Lastwiderstand also eine von der Eingangsspannung unabhängige konstante Leistung aufnimmt, ist das Produkt aus Eingangsspannung und -strom des geregelten Schaltungsteiles dieser Leistung proportional, also ebenfalls eine Kontante. Das hat zur Folge, dass der Eingangsstrom mit zunehmender Spannung kleiner wird und umgekehrt, so dass der differentielle Eingangswiderstand des geregelten Schaltungsteiles bereichweise negativ ist. In demjenigen Bereich der Eingangsspannung, in dem die von diesem Schaltungsteil aufgenommene Leistung im wesentlichen konstant ist, hat die Strom-Spannungs-Kennlinie hyperbolischen Verlauf, so dass der der Steigung dieser Kennlinie entsprechende (negative) differentielle Eingangswiderstand am kleinsten ist, wenn die Eingangsspannung den kleinsten Wert hat, bei dem eine einwandfreie Regelung des Stromversorgungsgerätes noch möglich ist.

Geregelte Stromversorgungsgeräte der in Frage stehenden Art besitzen einen Eingangssiebkreis zur Unterdrückung störender Rückwirkungen auf das speisende Netz. Dieser Eingangskreis besteht aus wenigstens einer Längsinduktivität und wenigstens einer Querkapazität. Diese beiden Schaltungselemente, deren Grössen durch die Forderungen nach einer ausreichenden Siebwirkung bestimmt sind, stellen ein schwingungsfähiges Gebilde dar, das im Zusammenhang mit dem erwähnten negativen Eingangswiderstand des geregelten Schaltungsteiles zu selbständigen Schwingungen angeregt werden kann. Die Untersuchung der Stabilitätsbedingungen zeigt, dass Schwingungen dann auftreten können, wenn der Quotient aus dem Wert der Induktivität und dem Produkt von Kapazität und der Summe der beteiligten ohmschen Widerstände (Innenwiderstand der Quelle und Ersatzreihenwiderstand der Kapazität) grösser ist als der Betrag des (negativen) Eingangswiderstandes des geregelten Schaltungsteiles. Diese Bedingung gilt mit guter Annäherung dann, wenn das Produkt aus den genannten ohmschen Widerständen klein ist im Vergleich zu dem Quotienten aus Induktivität und Kapazität. Das bedeutet umgekehrt, dass stabiler Betrieb gewährleistet ist, wenn die Summe der genannten ohmschen Widerstände grösser ist als der Quotient aus Induktivität und dem Produkt von Kapazität und Betrag des negativen Eingangswiderstandes. Für letzteren ist der im praktischen Betrieb mögliche Minimalwert einzusetzen, der dem Quotienten aus kleinstmöglicher Eingangsspannung und grösstmöglichem Eingangsstrom entspricht. Diese Beziehung legt es nahe, das Problem der Beseitigung unerwünschter Schwingungen dadurch zu lösen, dass die Kapazität der Siebschaltung und/oder der in Reihe wirksame ohmsche Widerstand vergrössert werden. Durch diese Massnahme wird der von den Gliedern der Siebschaltung gebildete Parallelkreis derart verstimmt und/oder bedämpft, dass die erwähnte Stabilitätsbedingung erfüllt ist. Die Vergrösserung der wirksamen Kapazität kann vorzugsweise dadurch erreicht werden, dass dem vorhandenen hochwertigen Impulsspeicherkondensator der Siebschaltung ein Elektrolytkondensator hoher Kapazität parallelgeschaltet wird.

Für moderne Stromversorgungsgeräte mit Umrichtern sehr hoher Leistung sind die beiden beschrieben Massnahmen zur Beseitigung der Schwingneigung jedoch ungeeignet:

Es ist eine der wichtigsten Vorteile von am Drehstromnetz betriebenen Hochleistungsumrichtern, dass die Kapazität ihres Eingangskreises (Siebschaltung) sehr klein sein kann, was zu einer entsprechend niedrigen Netzbelastung führt. Dieser Vorteil würde durch die Kapazitätserhöhung zum Zwecke der Beseitigung der Schwingungsneigung zunichte gemacht werden.

Die Vergrösserung des in Reihe mit der Kapazität wirksamen Widerstandes ist bei Hochleistungsumrichtern zwar grundsätzlich anwendbar, führt jedoch zu einer unannehmbar hohen Verlustleistung in diesem Widerstand. Dies gilt insbesondere für den Betrieb am Drehstromnetz, bei dem nach der Gleichrichtung hohe überlagerte Wechselspannungsanteile verbleiben. Diese hohe Verlustleistung bringt einerseits das Problem mit sich, die entsprechende in relativ kleinem Volumen entstehende Verlustwärme zu beseitigen, andererseits verschlechtert sie den Wirkungsgrad nicht unerheblich, womit ein wichtiger Vorteil moderner Umrichter-Schaltungstechnik teilweise zunichte gemacht wird.

Der Erfindung liegt die Aufgabe zugrunde, eine Schaltungsanordnung der im Gattungsbegriff des Patentanspruches 1 beschriebenen Art derart weiter zu bilden, dass die Gefahr störender Schwingungen beseitigt ist, ohne dass das speisende Netz einer hohen kapazitiven Belastung ausgesetzt wird und ohne dass hohe Verlustleistung auftritt, die den Wirkungsgrad spürbar beeinträchtigt.

Diese Aufgabe wird durch eine Schaltungsanordnung mit den Merkmalen des Patentanspruches 1 gelöst.

Erfindungsgemäss wird also die Resonanz des vorhandenen Eingangskreises (Siebschaltung) durch eine Serienresonanz der gleicher Frequenz kompensiert, so dass die Gesamtimpedanz bei dieser Frequenz ein Minimum aufweist und damit die Gefahr von Schwingungen bei dieser Frequenz beseitigt ist. Durch die erfindungsgemässe Einführung eines Serienresonanzkreises entsteht ein schwingungsfähiges Gebilde, dessen Frequenzkennlinie zwei Maxima aufweist, die (parasitären) Resonanzen unterhalb bzw. oberhalb der (ursprünglichen) Resonanzstelle entsprechen. Wenn man für dieses schwingungsfähige Gebilde wieder die Stabilitätsbedingungen untersucht, zeigt sich, dass die beiden parasitären Resonanzen mit vergleichsweise niederohmigen Widerständen so bedämpft werden können, dass die Gefahr des Auftretens von Schwingungen beseitigt ist. Die Grösse des für die Bedämpfung erforderlichen Widerstandes verringert sich, im Vergleich zu dem Widerstandswert, der für die für Bedämpfung erforderlich ist, wenn die erfindungsgemässe Einfügung des Serienresonanzkreises unterbleibt, etwa in demselben Masse, in dem die Induktivität des Serienresonanzkreises kleiner ist als die Längsinduktivität der (ursprünglichen) Siebschaltung im Eingangskreis. Damit verringert sich die Verlustleistung um denselben Faktor. Bei einem ausgeführten Stromversorgungsgerät mit einer Leistung von 8 kW betrug dieser Faktor etwa 10. Eine theoretisch mögliche weitere Verringerung das Dämpfungswiderstandes (und damit der Verlustleistung) ist in der Praxis dadurch begrenzt, dass ein Kompromiss bezüglich der Baugrössen (und Verlustfaktoren) der Schaltungselemente für den Serienresonanzkreis eingegangen werden muss. Der erwähnte Faktor 10 hat sich für ein Stromversorgungsgerät der genannten Leistung als günstiger Kompromiss erwiesen.

Im folgenden sei die Erfindung anhand der Zeichnung näher erläutert:

Fig. 1 zeigt eine schematische Schaltungsdarstellung eines Gleichstromrichters und dient zur Erläuterung der der Erfindung zugrunde liegenden Problematik,

Fig. 2 zeigt die Stromspannungskennlinie des Eingangs des Umrichterteiles der Schaltung von Fig. 1,

Fig. 3 zeigt die schematische Schaltung eines Dreiphasen-Schaltnetzgerätes gemäss der Erfindung,

Fig. 4 zeigt ein Netzwerk zur Veranschaulichung der vom Eingang des Umrichterteils aus gesehenen frequenzabhängigen Impedanz,

Fig. 5 zeigt die Impedanz des Netzwerkes gemäss Fig. 4 in Abhängigkeit von der Frequenz, wobei die Wirkung ohmscher Widerstände vernachlässigt ist.

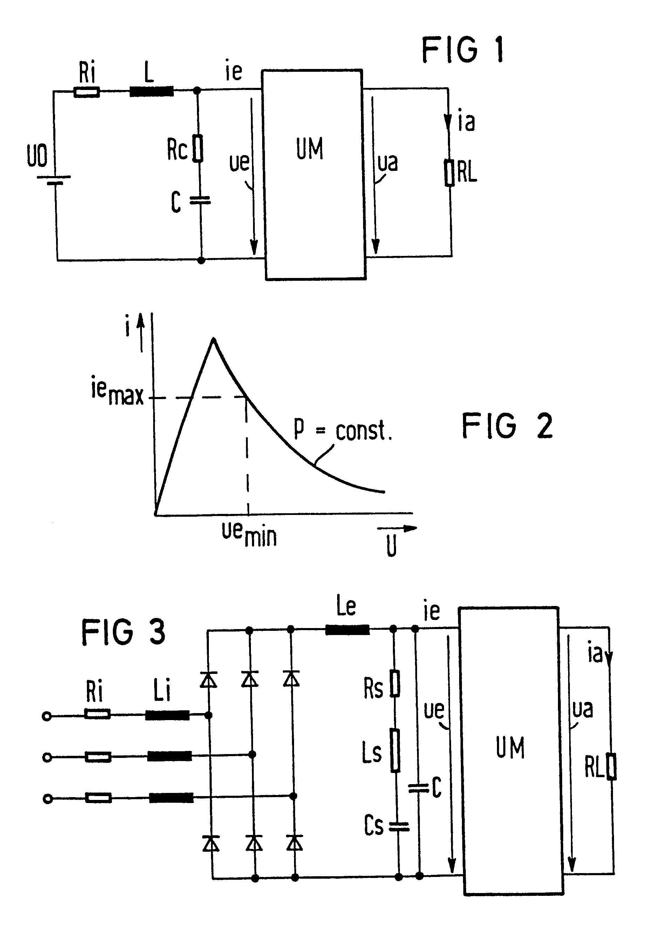

Der in Fig. 1 dargestellte Gleichstromumrichter besteht aus einem Umrichterteil UM, dem ein Eingangskreis vorgeschaltet ist, der eine aus einer Längsinduktivität L und einer Querkapazität C bestehende Siebschaltung bildet. Die Gleichspannungsspeisequelle ist mit Uo bezeichnet. An den Ausgang des Umrichterteils UM ist ein Lastwiderstand RL angeschlossen. Der Eingangsstrom des Umrichterteils UM ist mit ie bezeichnet, sein Ausgangsstrom mit ia. Die Eingangs- und Ausgangsspannungen des Umrichters sind mit ue bzw. ua bezeichnet.

Das Umrichterteil UM ist vorzugsweise ein Durchflussumrichter, dessen Lastschalter mit konstanter Frequenz ein- und ausgeschaltet und zur Regelung der Ausgangsspannung ua auf einen vorgegebenen Sollwert plusbreitenmoduliert ist. Wenn die Ausgangsspannung ua durch diese Regelung auf einem konstanten Wert gehalten wird, ist bei gegebener Grösse des Lastwiderstandes RL die an diesen abgegebene Leistung Pa = ua.ia konstant. Falls das Umrichterteil UM einen hinreichend grossen Wirkungsgrad besitzt, entspricht die an seinem Eingang aufgenommene Leistung Pe = ue.ie im wesentlichen der Ausgangsleistung Pa und ist ebenfalls kontant. Dies hat zur Folge, dass die Strom-Spannungs-Kennlinie, die den Zusammenhang von ie und ue wiedergibt, den in Fig. 2 dargestellten Verlauf hat: Im Bereich niedriger Eingangsspannungen ue, in welchem keine Regelung der Ausgangsspannung stattfindet, verläuft die Strom-Spannungs-Kennlinie linear. In dem sich daran anschliessenden Bereich, in welchem die Ausgangsspannung durch Beeinflussung des Impuls-Pausenverhältnisses des in dem Umrichterteil UM vorgesehenen Lastschalters geregelt wird, hat die Kennlinie entsprechend der Beziehung ie = Pe/ue den dargestellten hyperbolischen Verlauf. Kurvenparameter ist die aufgenommen Leistung Pe. Man erkennt, dass der Eingangsstrom ie in diesem Bereich mit wachsender Eingangsspannung ue kleiner wird und umgekehrt. Dies bedeutet, dass der differentielle Eingangswiderstand des Umrichterteils UM in diesem Bereich negativ ist. Dieser negative Widerstand kann den aus der Kapazität C, der Induktivität L und den mit diesen Elementen in Reihe wirksamen ohmschen Widerständen Rc bzw. Ri, (der neben dem ohmschen Widerstand der die Induktivität L verkörpernden Drossel auch den Innenwiderstand der Quelle Uo beinhalten möge), so weit entdämpfen, dass Schwingungen auftreten.

Zur Untersuchung der Stabiltätsbedingungen stellt man die Differentialgleichungen des aus den dargestellten Schaltungselementen (einschliesslich des Eingangswiderstandes Re des Umrichterteils UM) bestehenden Systems auf. Das System neigt nur dann nicht zu selbsttätigen Schwingungen, d.h. es ist nur dann stabil, wenn alle Lösungen der charakteristischen Gleichung negative Realteile haben. Dies ist näherungsweise dann der Fall, wenn

$$|Re| > \frac{L}{C(Ri + Rc)} .$$

Der Absolutwert von Re ist am kleinsten, wenn die maximale Leistung des Umrichters $P_{max}$ bei kleinster Eingangsspannung $ue_{min}$, d.h. grösstem Eingangsstrom $ie_{max}$ erbracht werden muss. Da wegen des oben erwähnten hyperbolischen Verlaufes der Strom-Spannungskennlinie $|Re| = ue/ie$ ist, ist die Stabilitätsbedingung näherungsweise durch folgende Beziehung gegeben:

$$\frac{ue_{min}}{ie_{nax}} > \frac{L}{C(Ri + Rc)}$$

Zur Erfüllung dieser Stabilitätsbedingung ist es gemäss dem Stand der Technik üblich, die Kapazität C und/oder den im Querzweig wirksamen Widerstand Rc hinreichend gross zu machen. Dabei kann zusätzlich zu dem vorhandenen Kondensator mit der Kapazität C, der ein hochwertiger Impulsspeicherkondensator sein muss, in einem weiteren Querzweig ein Elektrolytkondensator entsprechend hoher Kapazität angeordnet werden, dessen Güte im allgemeinen so gering ist, dass der entsprechende Reihenersatzwiderstand mithilft, die obengenannte Bedingung zu erfüllen.

Beide Methoden (Widerstand und/oder Kapazitätserhöhung) sind für moderne Hochleistungs-Schaltnetzgeräte unbrauchbar, da sie eine zu starke kapazitive Belastung für das speisende Netz bzw. eine zu grosse ohmsche Verlustleistung bewirken.

Zur Behebung dieser Nachteile wird daher gemäss der Erfindung vorgeschlagen, in einem Querzweig des Eingangskreises einen Serienresonanzkreis anzuordnen. In Fig. 3 ist ein entsprechendes Ausführungsbeispiel der Erfindung dargestellt. Es handelt sich um ein Dreiphasen-Schaltnetzgerät, das von der gleichgerichteten Spannung eines Drehstromnetzes gespeist ist. Die Impedanz des speisenden Netzes ist durch ohmsche Innenwiderstände $R_i$ und Induktivitäten $L_i$ angedeutet. Die im Längszweig des Eingangskreises angeordnete Induktivität ist mit $L_e$ bezeichnet. Der genannte Serienresonanzkreis besteht aus einer Kapazität $C_s$, einer Induktivität $L_s$ und einem ohmschen Dämpfungswiderstand $R_s$. Die übrigen Schaltungsteile tragen dieselbe Bezeichnung wie in Fig. 1.

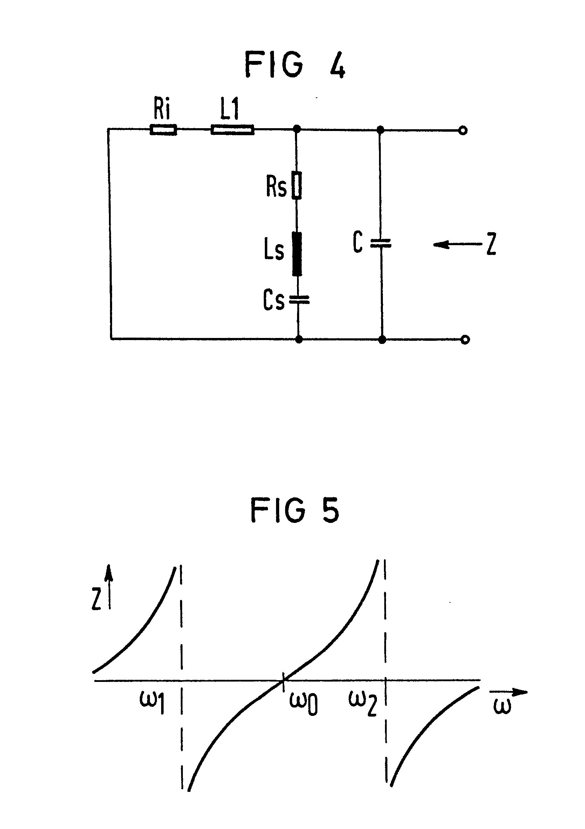

Fig. 4 zeigt ein Ersatzschaltbild der vom Eingang des Umrichterteils UM in Richtung auf das speisende Netz gesehenen komplexen Impedanz Z. In dieser Darstellung sind die Netzinduktivität $L_i$ und die Längsinduktivität $L_e$ des Eingangskreises zu einer mit $L_1$ bezeichneten Gesamtinduktivität zusammengefasst. Der aus den Elementen $C_s$, $L_s$ und $R_s$ bestehende Serienresonanzkreis ist auf dieselbe Frequenz abgestimmt wie der aus den Elementen C, $L_1$ und $R_i$ bestehende Parallelresonanzkreis. Es gilt also $L_s \cdot C_s$ = $L_eC$, wobei die Beeinflussung der Resonanzfrequenz durch die ohmschen Widerstände $R_i$ und $R_e$ vernachlässigt ist.

In Fig. 5 ist der Verlauf der Impedanz Z in Abhängigkeit von der Frequenz $\omega$ dargestellt, wobei der Einfluss der ohmschen Widerstände wieder vernachlässigt ist, so dass sich die Impedanz Z als reiner Blindwiderstand darstellt. Man erkennt, dass die Impedanz bei der durch $\sqrt{L_1 \cdot C} = \sqrt{L_s \cdot C_s}$ gegebenen «Hauptresonanz» Null wird. Oberhalb und unterhalb dieser Hauptresonanz ergeben sich zwei weitere Resonanzstellen, die mit $\omega_1$ bzw. $\omega_2$ bezeichnet sind. Die dargestellte Kurve hat folgenden Verlauf

$$Z = \frac{j\,\omega\,L_1\,(1-\omega^2\,L_s \cdot C_s)}{(1-\omega^2\,L_s \cdot C_s)^2 - \omega^2\,L_1 \cdot C_s}$$

Durch den Einfluss der bei der Darstellung gemäss Fig. 5 nicht berücksichtigten ohmschen Widerstände ergeben sich bei den beiden genannten Resonanzfrequenzen Impedanzmaxima von endlicher Grösse.

Die Resonanzstelle $\omega_1$ wird im wesentlichen durch die Induktivität $L_1$ und die Kapazität $|C|$ bestimmt. Die oben angegebene Stabilitätsbedingung für diese Resonanzstelle liefert eine Bestimmungsungleichung für den Dämpfungswiderstand:

$$R_i + R_s > \frac{L_1 \cdot ie_{max}}{C_e \cdot ue_{min}}.$$

Für die Resonanzstelle $\omega_2$, die im wesentlichen durch die Induktivität $L_e$ und die Kapazität C bestimmt ist, lautet die Stabilitätsbedingung

$$R_s > \frac{L_s \cdot ie_{max}}{C \cdot ue_{min}}.$$

Man erkennt, dass der Dämpfungswiderstand $R_s$ um so kleiner sein kann, je grösser die Kapazität $C_s$ bzw. je kleiner die Induktivität $L_s$ des Serienresonanzkreises sind.

In einem praktisch realisierten Ausführungsbeispiel für ein Schaltnetzgerät mit einer Leistung von 8kW wurde von folgenden Werten ausgegangen:

$$ue_{min} = 550\ V$$
$$ie_{max} = 15\ A.$$

Die Schaltungselemente der Siebschaltung des Eingangskreises haben folgende Werte:

$$L_1 = 2\ mH$$
$$C = 10\ \mu F.$$

Für die Elemente des Serienresonanzkreises wurden folgende Werte gewählt:

$$L_s = 90\ \mu H$$
$$C_s = 220\ \mu F.$$

Wenn diese Grössen in die oben angegebenen Ungleichungen für die Stabilitätsbedingungen eingesetzt werden ergibt sich

$$R_i + R_s > \frac{2 \cdot 10^{-3} \cdot 15}{220 \cdot 10^{-6} \cdot 550} = 0,25\ Ohm$$

$$R_s > \frac{90 \cdot 10^{-6} \cdot 15}{10 \cdot 10^{-6} \cdot 550} = 0,25\ Ohm$$

Für den praktischen Einsatz wurde $R_s = 0,39\ Ohm$ gewählt. Hiermit konnte sehr gute Stabilität bei vergleichsweise niedriger Verlustleitung erreicht werden. Für die Kompensation ohne den erfindungsgemäss vorgesehenen Serienresonanzkreis hätte der Dämpfungswiderstand einen etwa 10 mal so grossen Wert haben müssen, so dass auch die Verlustleistung um den Faktor 10 grösser gewesen wäre.

Für die praktische Dimensionierung der Schaltung gemäss Fig. 3 sollte von folgenden Richtwerten ausgegangen werden:

Die Kapazität $C_s$ sollte etwa den 10 bis 20fachen Wert von C haben. Wegen der Bedingung $L_s \cdot C_s$ = $L_1 \cdot C$ (gleiche Hauptresonanz des Parallel- und Serienresonanzkreises) sollte $L_s$ dementsprechend fünf bis zwanzig Mal kleiner sein als die Induktivität $L_1$. Dämpfungswiderstand $R_s$ des Serienresonanzkreises erfüllt die oben angegebenen Stabilitätsbedingungen mit Sicherheit, wenn er den Wert $2 \cdot (L_1 \cdot ie_{max})/C_s \cdot ue_{min}$ hat.

Die Anordnung gemäss der Erfindung ist selbstverständlich nicht auf Schaltnetzgeräte für Wechselstrom, insbesondere Drehstromnetze, beschränkt. Sie ist vielmehr mit Vorteil auch bei allen anderen Stromversorgungsgeräten anwendbar, bei denen ein geregelter Schaltungsteil in dem im Betrieb auftretenden Arbeitsbereich eine negative Eingangsimpedanz aufweist, und somit im Zusammenhang mit einer Eingangssiebschaltung die Gefahr unerwünschter Schwingungen auftreten kann.

## Patentansprüche

1. Schaltungsanordnung für geregelte Stromversorgungsgeräte, insbesondere für Umrichter, mit einem geregelten Schaltungsteil, dem ein Eingangskreis vorgeschaltet ist, der eine aus wenigstens einer Längsinduktivität (Le) und einer Querkapazität (C) bestehende Siebschaltung zur Unterdrückung störender Rückwirkungen auf das speisende Netz aufweist, und der in einem Querzweig mit einem aus einer weiteren Kapazität (Cs), einer weiteren Induktivität (Ls) und einem ohmschen Dämpfungswiderstand (Rs) bestehenden Serienresonanzkreis ausgestattet ist, dessen Resonanzfrequenz ($W_0$) zumindest annähernd derjenigen des von der Querkapazität (C) und der Längsinduktivität (Le) der Siebschaltung gebildeten Parallelresonanzkreises entspricht, dadurch gekennzeichnet,

— dass die Kapazität (Cs) des Serienresonanzkreises grösser und seine Induktivität (Ls) kleiner sind als die den Parallelresonanzkreis bildende Querkapazität (C) bzw. Längsinduktivität (Le), derart dass die Impedanz (Z) des resultierenden Netzwerkes (Fig. 4) bei der genannten Resonanzfrequenz ($W_0$) ein Minimum und bei einer im wesentlichen durch die Längsinduktivität (Le) der Siebschaltung und die Kapazität (Cs) des Serienresonanzkreises bestimmten unteren Resonanzfrequenz ($W_1$) sowie bei einer im wesentlichen durch die Querkapazität (C) der Siebschaltung und die Induktivität (Ls) des Serienresonanzkreises bestimmten oberen Resonanzfrequenz ($W_2$) Maxima aufweist,

— und dass sowohl bei der oberen als auch bei der unteren Resonanzfrequenz die Entdämpfung durch den dem Quotienten aus minimaler Eingangsspannung ($ue_{min}$) und maximalem Eingangsstrom ($ie_{max}$) entsprechende negative Eingangswiderstand des geregelten Schaltungsteiles (UM) dadurch überkompensiert ist, dass der in dem Serienresonanzkreis vorgesehene Dämpfungswiderstand (Rs) grösser ist als der Quotient aus Längsinduktivität (Le) der Siebschaltung und Kapazität (Cs) des Serienresonanzkreises multipliziert mit dem Quotienten aus maximalem Eingangsstrom ($ie_{max}$) und minimaler Eingangsspannung ($ue_{min}$) des geregelten Schaltungsteiles (UM).

2. Schaltungsanordnung nach Anspruch 1, dadurch gekennzeichnet, dass der induktive Widerstand des Serienresonanzkreises (Ls) wenigstens um den Faktor 5 kleiner und der kapazitive Widerstand des Serienresonanzkreises (Cs) dementsprechend wenigstens um den Faktor 5 grösser ist als der kapazitive Widerstand (C) der Siebschaltung.

## Claims

1. A circuit arrangement for regulated current supply devices, in particular for converters, comprising a regulated stage preceded by an input circuit which comprises a filter circuit having at least one series inductance (Le) and one shunt capacitance (C) to suppress disturbances on the supply network, and has a shunt arm containing a series resonant circuit which consists of a further capacitance (Cs), a further inductance (Ls) and an attenuating resistor (Rs), the resonant frequency (Wo) of which corresponds at least approximately to that of the parallel resonant circuit formed by the shunt capacitance (C) and the series inductance (Le) of the filter circuit, characterised in that

— the capacitance (Cs) of the series resonanz circuit is greater and its inductance (Ls) is smaller than the respective shunt capacitance (C) and series inductance (Le) which form the parallel resonant circuit, such that the impedance (Z) of the resultant network (Fig. 4) exhibits a minimum at the aforesaid resonant frequency ($W_0$) and a maximum at a lower resonant frequency ($W_1$) fundamentally determined by the series inductance (Le) of the filter circuit and the capacitance (Cs) of the series resonant circuit and at an upper resonant frequency ($W_2$) fundamentally determined by the shunt capacitance (C) of the filter circuit and the inductance (Ls) of the series resonant circuit;

— and that both at the upper and at the lower resonant frequency the de-attenuation by the negative input impedance of the regulated stage (UM), which corresponds to the quotient of the minimum input voltage ($ue_{min}$) and maximum input current ($ie_{max}$), is over compensated in that the attenuating resistance (Rs) provided in the series resonant circuit is greater than the quotient of the series inductance (Le) of the filter circuit and the capacitance (Cs) of the resonant circuit multiplied by the quotient of the maximum input current ($ie_{max}$) and minimum input voltage ($ue_{min}$) of the regulated stage (UM).

2. A circuit arrangement as claimed in Claim 1, characterised in that the inductive impedance of the series resonant circuit (Ls) is at least a factor of 5 smaller than the capacitive impedance (C) of the filter circuit, whilst the capacitive impedance of the series resonant circuit (Cs) is accordingly at least a factor of 5 greater than the capacitive impedance (C) of the filter circuit.

## Revendications

1. Montage pour des appareils ou bloc d'alimentation en courant régulés, notamment pour des convertisseurs comportant une partie de circuit régulée, en amont de laquelle est branché un circuit d'entrée qui possède un circuit de lissage, constitué par une inductance longitudinale (Le) et par une capacité transversale (C) et sert à supprimer des réactions parasites dans le réseau d'alimentation, et qui comporte, dans une branche transversale, un circuit résonnant série constitué par une autre capacité (Cs), une autre inductance (Ls) et une résistance ohmique d'amortissement (Rs) et dont la fréquence de résonance (W₀) correspond au moins approximativement à celle du circuit résonnant parallèle constitué par la capacité transversale (C) et par l'inductance longitudinale (Le) du circuit de lissage, caractérisé par le fait

— que la capacité (Cs) et l'inductance (Ls) du circuit résonnant série sont respectivement supérieure et inférieure à la capacité transversale (C) et à l'inductance longitudinale (Le), qui constituent le circuit résonnant parallèle, de telle sorte que l'impédance (Z) du réseau obtenue (figure 4) présente un minimum pour ladite fréquence de résonance (W₀) et présente des maxima dans le cas d'une fréquence de résonance inférieure (W₁) déterminée essentiellement par l'inductance longitudinale (Le) du circuit de lissage et par la capacité (Cs) du circuit résonnant série, ainsi que dans le cas d'une fréquence de résonance supérieure (W₂) déterminée essentiellement par la capacité transversale (C) du circuit de lissage et par l'inductance (Ls) du circuit résonant série,

— et qu'aussi bien dans le cas de la fréquence de résonance supérieure que dans le cas de la fréquence de résonance inférieure, la compensation de l'affaiblissement est surcompensée par la résistance négative d'entrée, qui correspond au quotient de la tension minimale d'entrée (ue_min) par le courant maximal d'entrée (ie_max), de la partie régulée de circuit (UM) par le fait que la résistance d'affaiblissement (Rs), qui est prévue dans le circuit résonnant série, est supérieure au quotient de l'inductance longitudinale (Le) du circuit de lissage par la capacité (Cs) du circuit résonnant série, multipliée par le quotient du courant d'entrée maximum (ie_max) par la tension d'entrée minimale (ie_min) de la partie de circuit réglée (UM).

2. Montage suivant la revendication 1, caractérisé par le fait que la résistance inductive du circuit résonnant série (Ls) est inférieure au moins du facteur 5 à la résistance capacitive (C) du circuit de lissage et que la résistance capacitive du circuit résonnant série (Cs) est, de façon correspondante, supérieure au moins du facteur 5, à cette résistance capacitive (C).

FIG 1

FIG 2

FIG 3

# FIG 4

Ri · L1 · Rs · Ls · Cs · C · Z

# FIG 5

Z · ω1 · ω0 · ω2 · ω